# EUROPÄISCHE PATENTSCHRIFT

(11) **EP 1 744 614 B1**
(45) Veröffentlichungstag und Bekanntmachung des Hinweises auf die Patenterteilung: **03.09.2008**
(21) Anmeldenummer: 05743340.1
(22) Anmeldetag: 27.04.2005
(51) Int. Cl.: A01D 25/04

(54) **VERFAHREN UND VORRICHTUNG ZUM RODEN VON WURZELFRÜCHTEN, INSBESONDERE VON RÜBEN**
METHOD AND DEVICE FOR UPROOTING ROOT VEGETABLES, PARTICULARLY BEETS
PROCEDE ET DISPOSITIF D'ARRACHAGE DE PLANTES A RACINES, EN PARTICULIER DE BETTERAVES

(30) Priorität: 30.04.2004 DE 102004021359
(43) Veröffentlichungstag der Anmeldung: 24.01.2007
(73) Patentinhaber: Franz Kleine Vertriebs- und Engineering GmbH, 33154 Salzkotten (DE)
(72) Erfinder: LÜHS, Herbert, 33142 Büren-Brenken (DE)
(74) Vertreter: Rehberg Hüppe + Partner
(86) Internationale Anmeldenummer: PCT/EP2005/004473
(87) Internationale Veröffentlichungsnummer: WO 2005/104815

(56) Entgegenhaltungen:
- EP-A- 0 780 049
- WO-A-99/43197
- DE-A1- 2 721 125
- DE-A1- 4 035 570
- DE-C- 901 967

## Beschreibung

Die Erfindung betrifft ein Verfahren zum Roden von in parallelen Reihen im Boden stehenden Wurzelfrüchten, insbesondere von Rüben, mit den Merkmalen des Oberbegriffs des Patentanspruchs 1. Weiterhin betrifft die Erfindung eine Vorrichtung zum Roden von in parallelen Reihen im Boden stehenden Wurzelfrüchten, insbesondere von Rüben, mit den Merkmalen des Oberbegriffs des Patentanspruchs 5.

### STAND DER TECHNIK

Bei einem bekannten Verfahren zum Roden von Wurzelfrüchten mit dem Merkmal des Oberbegriffs des Patentanspruchs 1 werden die Wurzelfrüchte mit den Scharflächen der Rodewerkzeuge hochgepflügt und anschließend von dem gelockerten Boden aufgenommen. Dies entspricht zumindest beim Roden von Rüben jedoch nicht der derzeitigen Praxis. Gemäß dieser Praxis werden die Rüben mit Rodescharen, die auf beiden Seiten der Rüben angeordnete Scharflächen aufweisen, in ihrer jeweiligen Reihe erfasst und nach oben aus dem Boden gelenkt. Dabei können die Rüben entgegen der Bewegungsrichtung der Rodewerkzeuge durch oberhalb der Rodeschare mit einer Welle umlaufende Paddel abgestützt werden. Die aus dem Boden ausgehobenen Rüben werden an eine mit den Rodewerkzeugen bewegte Förder- und Reinigungsstrecke übergeben, die die Rüben, bis sie in einen Bunker eingebracht werden, möglichst weitgehend von anhaftender Erde befreit. Die Menge der anhaftenden Erde ist von dem jeweiligen Boden und den Witterungsverhältnissen abhängig. Auch der Reinigungserfolg wird von diesen Faktoren bestimmt. Besonders schwierig ist es aber in jedem Fall, Erde, die durch die Scharflächen der Rodeschare seitlich an die Rüben bei deren Ausheben aus dem Boden angedrückt wurde, wieder von den Rüben zu entfernen. Diese Anteile der Erde werden auch als Hafterde bezeichnet und stellen ein relevantes Problem beim Roden von Rüben mit einer herkömmlichen Vorrichtung nach dem Oberbegriff des Anspruchs 5 dar, wie sie beispielsweise aus der DE 40 35 570 A1 bekannt ist.

Das Problem der Hafterde wird auch nicht bei einer Rodevorrichtung gelöst, wie sie aus der DE 94 13 431 U1 bekannt ist. Hier sind als Rodewerkzeuge V-förmig zueinander angestellt Roderäder vorgesehen, die in den Boden eindringen und die zwischen sie gelangenden Rüben durch eine Drehbewegung aus dem Boden ausheben. Die im Wesentlichen seitlich an den Rüben angreifenden Roderäder drücken ebenso wie feststehende Rodeschare Hafterde beim Roden an die Rüben an.

Aus der WO 99/43197 ist ein Pflugschar mit sich lateral zu seiner Bewegungsrichtung erstreckenden Scharflächen bekannt. Die Scharflächen dienen dazu, den Boden flächig anzuheben. An ihren freien Enden sind die Scharflächen nach oben umgebogen, um den angehobenen Boden so zu führen, dass er im Wesentlichen an seinen ursprünglichen Ort vor dem Anheben zurückgelangt. Eine Bodenbearbeitung mit diesem bekannten Pflugschar kann zur mechanischen Unkrautbekämpfung dienen. Der Pflugschar wird auch für eine Sämaschine vorgeschlagen, die Saatgut unter dem angehobenen Boden ablegt.

### AUFGABE DER ERFINDUNG

Der Erfindung liegt die Aufgabe zugrunde, ein Verfahren nach dem Oberbegriff des Anspruchs 1 und eine Vorrichtung nach dem Oberbegriff des Anspruchs 5 aufzuzeigen, bei denen das Problem der Hafterde beim Roden insbesondere von Rüben beseitigt ist.

### LÖSUNG

Erfindungsgemäß wird diese Aufgabe durch ein Verfahren zum Roden von in parallelen Reihen im Boden stehenden Wurzelfrüchten, insbesondere von Rüben, mit den Merkmalen des Patentanspruchs 1 und eine Vorrichtung zum Roden von im Boden stehenden Wurzelfrüchten, insbesondere von Rüben, mit den Merkmalen des Patentanspruchs 5 gelöst. Vorteilhafte Ausführungsformen der Vorrichtung und des Verfahrens sind in den Unteransprüchen 2 bis 4 bzw. 6 bis 11 beschrieben.

### BESCHREIBUNG DER ERFINDUNG

Bei dem neuen Verfahren wird der Boden auf beiden Seiten der Reihen der Wurzelfrüchte mit sich lateral zu der Bewegungsrichtung der Rodewerkzeuge erstreckenden Scharflächen flächig angehoben. Auf diese Weise wird der Boden beiderseits der Rüben gelockert. Die Lockerung des Bodens strahlt dabei bis in den Bereich der Wurzelfrüchte hinein aus, ohne dass dabei aber die Ausrichtung der Wurzelfrüchte in den Reihen verloren geht, wie dies bei einfachen Verfahren des Hochpflügens der Wurzelfrüchte der Fall ist. Die Wurzelfrüchte können so mit zu den Reihen der Wurzelfrüchte ausgerichteten Leitflächen aus dem gelockerten Boden ausgehoben werden, Dabei ist keine Gefahr des Erzeugens von Hafterde gegeben, weil die Kräfte zum Anheben der Wurzelfrüchte aus dem gelockerten Boden verglichen mit Kräften, die zum Anheben der Wurzelfrüchte aus ungelockertem Boden notwendig sind, nur gering sein müssen. Zudem sorgt die Anordnung und Orientierung der Leitflächen bei dem neuen Verfahren für die Vermeidung von Hafterde. Die Leitflächen greifen weniger seitlich, d. h. mit schlechtem Wirkungsgrad für das Anheben der Wurzelfrüchte aus dem Boden, als vielmehr von unten an den Wurzelfrüchten an, so dass die Kontaktkräfte in Bezug auf eine bestimmte notwendige nach oben gerichtete Kraft zum Ausheben der Wurzelfrüchte aus dem Boden besonders klein bleiben. Die Leitflächen zum Ausheben der Wurzelfrüchte aus dem Boden sind bei dem neuen Verfahren nur lokal hinter den freien, auf die Reihen zeigenden Enden der Scharflächen vorgesehen, so dass möglichst wenig Erde mit den Rüben angehoben wird. Die dennoch mit den Rüben angehobene Erde ist locker und fällt leicht von den Rüben ab.

Obwohl bei dem neuen Verfahren die Kräfte zum Anheben der Wurzelfrüchte aus dem Boden vergleichsweise gering sind, ist es sinnvoll, die Wurzelfrüchte beim Ausheben aus dem Boden entgegen der Bewegungsrichtung der Rodewerkzeuge abzustützen. Dabei ist zu berücksichtigen, dass der vor und seitlich der Wurzelfrüchte gelockerte Boden bei dem neuen Verfahren nur eine vergleichsweise geringe Abstützung der Rüben gegen die Rodewerkzeuge darstellt.

Bei dem neuen Rodeverfahren wird der Materialfluss aus Wurzelfrüchten und Erde längs der und über die Rodewerkzeuge vergleichsweise wenig behindert. Insbesondere gibt es keine zulaufenden Freiräume zwischen Rodescharen oder Roderädern. Dennoch kann es sinnvoll sein, den Widerstand für den Materialfluss dadurch weiter zu reduzieren, dass die Rodewerkzeuge auf beiden Seiten der Reihen der Wurzelfrüchte in ihrer Bewegungsrichtung gegenläufig hin und her bewegt werden.

Wenn die nach dem neuen Verfahren ausgehobenen Wurzelfrüchte an einem mit den Rodewerkzeugen bewegte Förder- und Reinigungsstrecke eines insbesondere selbstfahrenden Rübenroders übergeben werden, fällt die mit den Rüben angehobene und auf die Förder-und Reinigungsstrecke gelangende Erde schnell von den Rüben ab, so dass die Rüben bis zum Erreichen eines Bunkers einen sehr hohen Reinigungsgrad erreicht haben.

Die neue Vorrichtung zum Roden von Wurzelfrüchten zeichnet sich dadurch aus, dass die Scharflächen lateral zu der Bewegungsrichtung der Rodewerkzeuge verlaufen, um den Boden auf beiden Seiten der Reihen der Wurzelfrüchte flächig anzuheben, um ihn zu lockern. Weiterhin sind zum Ausheben der Wurzelfrüchte aus dem gelockerten Boden lokal hinter den auf die Reihe zeigenden freien Enden der Scharflächen ansteigende Leitflächen vorgesehen.

Die Rodewerkzeuge sind vorzugsweise an mittig zwischen zwei Reihen von Wurzelfrüchten angeordneten Werkzeughaltern vorgesehen. Von den Werkzeughaltern aus erstrecken sich die Scharflächen der Rodewerkzeuge schräg nach hinten zu den Reihen der Wurzelfrüchte. Verglichen mit herkömmlichen Vorrichtungen zum Roden von Rüben wird auf diese Weise nur sehr wenig lateraler Bauraum beansprucht. Auf eine Reihe von Wurzelfrüchten in der Mitte eines mehrreihigen Rübenroders kommt nur ein einziger Werkzeughalter. Dieser ist zudem nicht über der jeweiligen Reihe der Rüben angeordnet, sondern neben ihr. Dies schafft Freiraum für weitere Einrichtungen, die die Rüben übernehmen und weiterfördern.

Beispielsweise ist auch hinreichend Raum vorhanden, um einen Antrieb vorzusehen, der nebeneinander angeordnete Werkzeughalter in der Bewegungsrichtung der Vorrichtung gegenläufig hin- und herbewegt, um den Materialfluss im Bereich der Rodewerkzeuge durch einen möglichst geringen Reibungswiderstand zu fördern. Ein solcher Antrieb kann eine Welle mit den einzelnen Werkzeughaltern zugeordneten Excentern umfassen.

Die Leitflächen, die lokal hinter den freien Enden der Scharflächen an diese anschließen, können bei der neuen Vorrichtung an Leitstäben vorgesehen sein, die unten an Scharkörper angesetzt sind, welche die horizontal verlaufenden Scharflächen ausbilden. Die Leitflächen setzen entsprechend vergleichsweise tief an. Dies harmoniert mit dem bereits angesprochenen Konzept, die Wurzelfrüchte möglichst von unten mit der Kraft zu beaufschlagen, die zu ihrem Ausheben aus dem Boden erforderlich ist, und weniger von der Seite.

Um die Rüben entgegen der Bewegungsrichtung der Rodewerkzeuge abzustützen, kann eine mit Paddeln besetzte, quer zur Bewegungsrichtung der Vorrichtung ausgerichtete und drehangetriebene Welle oberhalb der Leitflächen aller Rodewerkzeuge vorgesehen sein. Von den sich bewegenden Rodewerkzeugen aus betrachtet fördert die Welle mit den Paddeln die Rüben die Leitflächen entlang nach hinten oben.

Vorzugsweise ist die Welle über ihre gesamte Breite mit Paddeln besetzt. Sie unterstützt auf diese Weise auch den Erdfluss über die sich seitlich erstreckenden Scharflächen der Rodewerkzeuge.

Bei der neuen Vorrichtung werden die aus dem Boden ausgehobenen Wurzelfrüchte vorzugsweise von einem Walzenbett aus quer zur Bewegungsrichtung der Vorrichtung verlaufenden Reinigungswalzen übernommen. Zwischen diesen Reinigungswalzen fallen bereits die wesentlichen Anteile der mit den Rüben angehobenen Erde wieder auf den Boden herab. An das Bett aus Reinigungswalzen können sich weitere Reinigungselemente, wie beispielsweise Reinigungssterne, für die Wurzelfrüchte anschließen.

Vorteilhafte Weiterbildungen der Erfindung ergeben sich aus den abhängigen Patentansprüchen und der gesamten Beschreibung. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche abweichend von den gewählten Rückbeziehungen ist ebenfalls möglich und wird hiermit angeregt. Dies betrifft auch solche Merkmale, die in separaten Zeichnungsfiguren dargestellt sind oder bei deren Beschreibung genannt werden. Diese Merkmale können auch mit Merkmalen unterschiedlicher Patentansprüche kombiniert werden.

### KURZBESCHREIBUNG DER FIGUREN

Im Folgenden wird die Erfindung anhand eines in den Figuren dargestellten bevorzugten Ausführungsbeispiels weiter erläutert und beschrieben.
- **Fig. 1**: zeigt die Rodeanordnung eines Rübenroders als Ausführungsbeispiel für die neue Vorrichtung in einer Seitenansicht.
- **Fig. 2**: zeigt die Anordnung der Rodewerkzeuge des Rübenroders gemäß Fig. 1 in einer Ansicht von oben.
- **Fig. 3**: zeigt eine Seitenansicht eines einzelnen Rodewerkzeugs des Rübenroders als vergrößertes Detail von Fig. 1.

### FIGURENBESCHREIBUNG

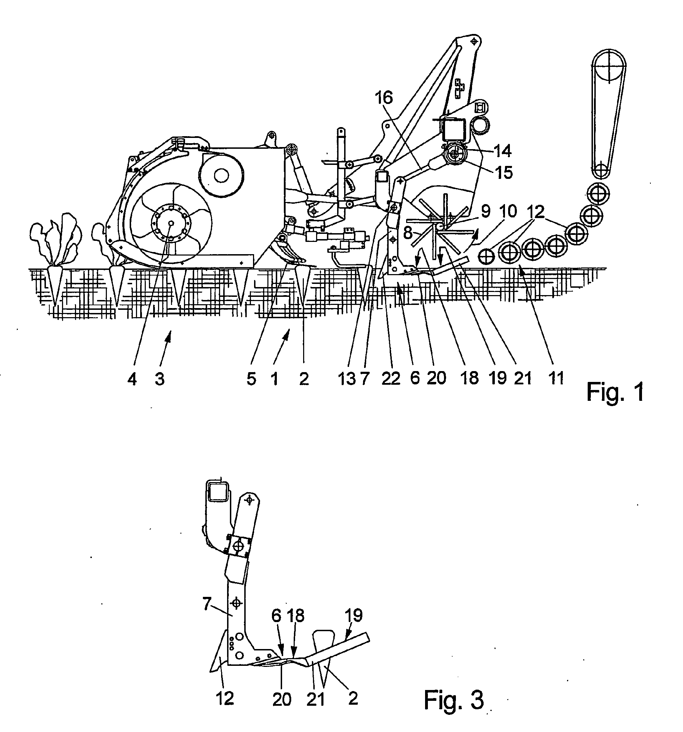

Die in **Fig. 1** skizzierte Vorrichtung 1 zum Roden von Rüben 2 ist die Rodeanordnung eines hier nicht vollständig wiedergegebenen selbstfahrenden Rübenroders. Der eigentlichen Rodeanordnung 1 vorgeschaltet ist eine Entblätterungsanordnung 3 aus einer mit Schleglerwerkzeugen besetzten Schleglerwelle 4 und einer Nachköpfeinrichtung 5. Die Rodeanordnung 1 wirkt so auf die abgeschlegelten und nachgeköpften Rüben 2 ein. Die Rodeanordnung 1 umfasst Rodewerkzeuge 6, die an Werkzeughaltern 7 gelagert sind, und eine mit Paddel 8 besetzte, drehangetriebene Welle 9. Die Drehrichtung der Welle ist durch einen Drehpfeil 10 angedeutet. An die Rodewerkzeuge 6 schließt ein Walzenbett 11 aus quer zu der Bewegungsrichtung der Rodeanordnung 1 verlaufenden Reinigungswalzen 12 an. Das Walzenbett 11 ist der erste Teil einer Förder- und Reinigungsstrecke des hier nicht weiter dargestellten selbstfahrenden Rübenroders, die in einem Bunker des Rübenroders endet. Die Werkzeughalter 7 für die Rodewerkzeuge 6 sind um eine horizontal verlaufende Querachse 13 verschwenkbar gelagert. Um die Querachse 13 werden die Werkzeughalter 7 hin und her geschwenkt. Diese Schwenkbewegung wird von einer quer verlaufenden Welle 14, mit dieser umlaufenden Excentem 15 und von den Excentem 15 bewegten Pleuelstangen 16 abgeleitet. Dabei sind die Excenter 15 benachbarter Werkzeughalter 7 um 180° verdreht zueinander auf der Welle 14 angeordnet.

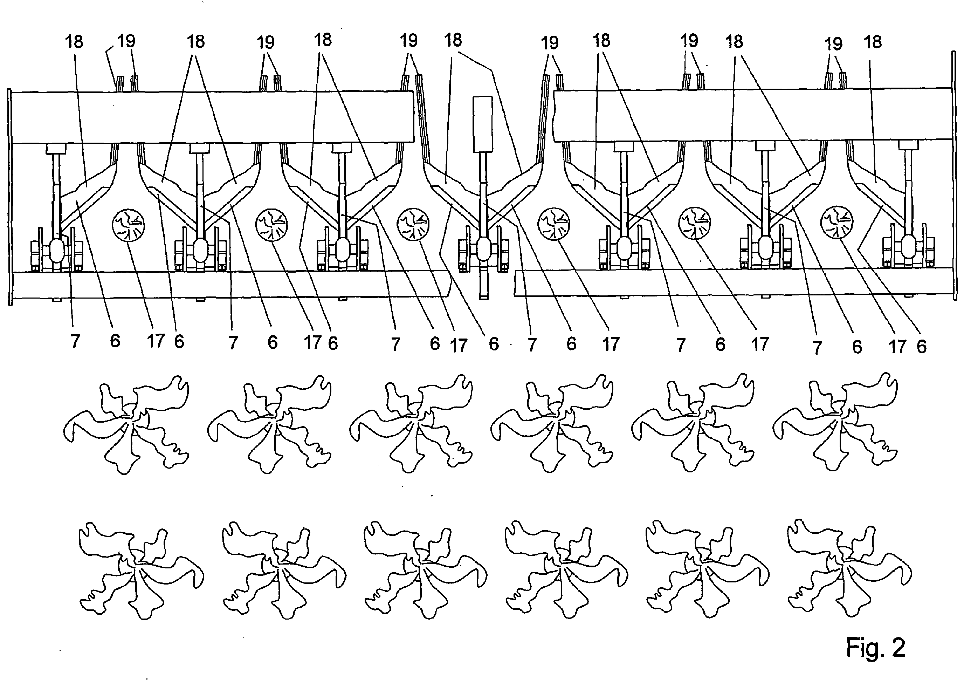

So bewegen sich die an benachbarten Werkzeughaltern 7 gelagerten, deren Anordnung aus **Fig. 2** ersichtlich ist, in der Bewegungsrichtung der Rodeanordnung über den Boden gegenläufig hin und her. Fig. 2 lässt auch die Lage der Werkzeughalter 7 und der daran gelagerten Rodewerkzeuge 6 relativ zu den Reihen 17 der Rüben erkennen, die hier in Form gestrichelter Linien wiedergegeben sind. Jeder Werkzeughalter 7 ist mittig zwischen zwei Reihen 17 angeordnet. Die Rodewerkzeuge 6 greifen seitlich neben den Reihen 17 und vor den darin angeordneten Rüben in den Boden ein. Die Rodewerkzeuge 6 verlaufen von den Werkzeughaltern 7 schräg nach hinten zu den Reihen 17. Bezüglich ihrer Höhenlage im Boden erstrecken sie sich im Wesentlichen horizontal. Sie dienen nicht dazu, den Boden zu wenden. Vielmehr heben sie den Boden von unten nach oben an, um ihn aufzulockern. Dies ermöglicht es anschließend, die Rüben aus dem gelockerten Boden anzuheben. Hierzu sind an die horizontalen Scharflächen 18 der Rodewerkzeuge 6 anschließende Leitflächen 19 vorgesehen. Die Leitflächen 19 steigen lokal hinter den freien Enden der Scharflächen 18 an. Sie erstrecken sich nicht über einen wesentlichen Teil der Breite der Rodeanordnung 1. Die Rüben laufen die Leitflächen 19 entlang und werden dabei aus dem Boden ausgehoben. Während die Scharflächen 18 an Scharkörpern 20 vorgesehen sind, werden die Leitflächen 19 von unten an die Scharkörper angesetzten Leitstäben 21 ausgebildet. Die auf den Leitflächen 19 hochlaufenden Rüben werden entgegen der Bewegungsrichtung der Rodeanordnung 1 über den Boden durch die Paddel 8 an der drehangetriebenen Welle 9 abgestützt. Von der Rodeanordnung 1 aus betrachtet fördern die Paddel 8 die Rüben über die Leitstäbe 21 nach hinten auf das Walzenbett 11. Die Welle 9 kann über ihre gesamte Breite mit Paddeln 8 besetzt sein, um auch den Fluss der Erde über die Scharkörper 20 hinweg zu unterstützen.

Vorne an den Werkzeughaltern 7 können Räumer 22 vorgesehen sein, wie auch aus der vergrößerten Darstellung eines Werkzeughalters 7 mit Rodewerkzeug 6 in **Fig. 3** zu sehen ist. Hier ist auch eine Rübe 2 angedeutet, wie sie die Leitstäbe 21 entlang läuft und dabei aus dem vor ihr gelockerten Boden ausgehoben wird. Dadurch, dass die Rüben 2 aus dem gelockerten Boden ausgehoben werden und das Anheben im Wesentlichen über einen schmalen Kontaktbereich von unten erfolgt, ist die Gefahr des Andrückens von Hafterde an die Rüben 2 beim Einsatz der neuen Vorrichtung in Form der Rodeanordnung 1 und des von ihr verwirklichten Rodeverfahrens ausgeschlossen. Außerdem sorgt die flächige Bearbeitung des Bodens mit den Scharflächen 18 der Rodewerkzeuge 6 für Vorbereitung der Flächen für eine Neueinsaat. Insbesondere resultiert sie in eine Unterbrechung des Unkrautwachstums auf den gerodeten Flächen, weil das Wurzelwerk des Unkrauts durchtrennt wird.

### BEZUGSZEICHENLISTE

- 1: Rodeanordnung
- 2: Rübe
- 3: Entblätterungsanordnung
- 4: Schleglerwelle
- 5: Nachköpfer
- 6: Rodewerkzeug
- 7: Werkzeughalter
- 8: Paddel
- 9: Welle
- 10: Drehpfeil
- 11: Walzenbett
- 12: Reinigungswalze
- 13: Querachse
- 14: Welle
- 15: Excenter
- 16: Pleuelstange
- 17: Reihe
- 18: Scharfläche
- 19: Leitfläche
- 20: Scharkörper

- 21: Leitstab
- 22: Räumer

## Patentansprüche

1. Verfahren zum Roden von in parallelen Reihen im Boden stehenden Wurzelfrüchten, insbesondere von Rüben, wobei mit sich längs der Reihen bewegenden, Scharflächen aufweisenden Rodewerkzeugen der Boden gelockert wird und wobei die Wurzelfrüchte aus dem gelockerten Boden ausgehoben werden, **dadurch gekennzeichnet, dass** der Boden auf beiden Seiten der Reihen (17) der Wurzelfrüche mit sich lateral zu der Bewegungsrichtung der Rodewerkzeuge (6) erstreckenden Scharflächen (18) flächig angehoben wird und dass die Wurzelfrüchte von Leitflächen (19) der Rodewerkzeuge (6), die lokal hinter den auf die Reihen (17) zeigenden freien Enden der Scharflächen (18) ansteigen, aus dem gelockerten Boden ausgehoben werden.

2. Verfahren nach Anspruch 1, **dadurch gekennzeichnet, dass** die Wurzelfrüchte beim Ausheben aus dem Boden entgegen der Bewegungsrichtung der Rodewerkzeuge (6) abgestützt werden.

3. Verfahren nach Anspruch 1 oder 2, **dadurch gekennzeichnet, dass** die Rodewerkzeuge (6) auf beiden Seiten der Reihen (17) der Wurzelfrüchte in ihrer Bewegungsrichtung gegenläufig hin und her bewegt werden..

4. Verfahren nach einem der Ansprüche 1 bis 3, **dadurch gekennzeichnet, dass** die ausgehobenen Wurzelfrüchte an eine mit den Rodewerkzeugen (6) bewegte Förder- und Reinigungsstrecke eines insbesondere selbstfahrenden Rübenroders übergeben werden.

5. Vorrichtung zum Roden von mehreren parallelen Reihen von im Boden stehenden Wurzelfrüchten, insbesondere von Rüben, indem die Vorrichtung längs der Reihen bewegt wird, mit Scharflächen aufweisenden Rodewerkzeugen zum Ausheben der Wurzelfrüchte aus dem Boden, **dadurch gekennzeichnet, dass** die Scharflächen (18) lateral zu der Bewegungsrichtung der Rodewerkzeuge (6) verlaufen, um den Boden auf beiden Seiten der Reihen (17) der Wurzelfrüche flächig anzuheben, um ihn zu lockern, und dass zum Ausheben der Wurzelfrüchte aus dem gelockerten Boden lokal hinter den auf die Reihen (17) zeigenden freien Enden der Scharflächen (18) ansteigende Leitflächen (19) vorgesehen sind.

6. Vorrichtung nach Anspruch 5, **dadurch gekennzeichnet, dass** mittig zwischen zwei Reihen (17) von Wurzelfrüchten jeweils ein Werkzeughalter (7) vorgesehen ist, von dem aus sich die Scharflächen (18) schräg nach hinten zu den Reihen (17) der Wurzelfrüchte erstrecken.

7. Vorrichtung nach Anspruch 6, **dadurch gekennzeichnet, dass** ein Antrieb (14-16) vorgesehen ist, um nebeneinander angeordnete Werkzeughalter (7) in der Bewegungsrichtung der Rodewerkzeuge (6) gegenläufig hin und her zu bewegen.

8. Vorrichtung nach Anspruch 7, **dadurch gekennzeichnet, dass** die Leitflächen (19) an Leitstäben (21) vorgesehen sind, die unten an Scharkörper (20) angesetzt sind, die die horizontal verlaufenden Scharflächen (18) ausbilden.

9. Vorrichtung nach einem der Ansprüche 5 bis 8, **dadurch gekennzeichnet, dass** eine mit Paddeln (8) besetzte, quer zur Bewegungsrichtung der Rodewerkzeuge (6) ausgerichtete und drehangetriebene Welle (9) oberhalb der Leitflächen (19) aller Rodewerkzeuge (6) vorgesehen ist.

10. Vorrichtung nach Anspruch 9, **dadurch gekennzeichnet, dass** die Welle (9) über ihre gesamte Breite mit Paddeln (8) besetzt ist.

11. Vorrichtung nach mindestens einem der Ansprüche 5 bis 10, **dadurch gekennzeichnet, dass** ein Walzenbett (11) aus quer zur Bewegungsrichtung der Rodewerkzeuge (6) verlaufenden Reinigungswalzen (12) vorgesehen ist, das die Wurzelfrüchte von allen Rodewerkzeugen (6) übernimmt.

## Claims

1. Method of uprooting root vegetables, particularly beets, which are disposed in the ground in parallel rows, wherein the ground is loosened by uprooting tools comprising ploughshare areas and wherein the root vegetables are lifted out of the loosened ground, **characterized in that** the ground is raised in a planar fashion on both sides of the rows (17) of the root vegetables by means of ploughshare areas (18) that extend laterally to the direction of movement of the uprooting tools (6), and that the root vegetables are lifted out of the loosened ground by guiding areas (19) of the uprooting tools (6) which rise locally behind the free ends of the ploughshare areas (18) pointing towards the rows (17).

2. Method of claim 1, **characterized in that** the root vegetables are supported against the direction of movement of the uprooting tools (6) while being lifted out of the ground.

3. Method of claim 1 or 2, **characterized in that** the uprooting tools (6) on both sides of the rows (17) of the root vegetables are oppositely moved back and forth in their direction of movement.

4. Method of any of the claim 1 to 3, **characterized in that** the lifted root vegetables are delivered to a conveying and cleaning line of a particularly self-propelled beet harvester, which conveying and cleaning line is moved with the uprooting tools (6).

5. Device for uprooting root vegetables, especially beets, which are disposed in the ground in several parallel rows in that the device is moved along the rows, the device having uprooting tools for lifting the root vegetables out of the ground, the uprooting tools comprising ploughshare areas, **characterized in that** the ploughshare areas extend laterally to the direction of movement of the uprooting tools (6) to raise the ground on both sides of the rows (17) of the root vegetables in a planar fashion to loosen it, and that guiding areas (19) are provided for lifting the root vegetables from the loosened ground, which rise locally behind the free ends of the ploughshare areas (18) pointing towards the rows (17).

6. Device according to claim 5, **characterized in that** one tool support (7) is arranged in the centre between each two rows (17) of root vegetables, from which the ploughshare areas (18) extend diagonally backwards towards the rows (17) of the root vegetables.

7. Device of claim 6, **characterized in that** a drive (14-16) is provided to oppositely move adjacent tool supports (7) back and forth in the direction of movement of the uprooting tools (6).

8. Device of claim 7, **characterized in that** the guiding areas (19) are provided on guiding rods (21), which are attached from beneath to ploughshare bodies (20), which provide the horizontally extending ploughshare areas (18).

9. Device of any of the claim 5 to 8, **characterized in that** a rotationally driven shaft (9) extending across the direction of movement of the uprooting tools (6) and provided with paddles (8) is arranged above the guiding areas (19) of all uprooting tools (6).

10. Device of claim 9, **characterized in that** the shaft (9) is provided with paddles (8) all-over its width.

11. Device of at least one of the claims 5 to 10, **characterized in that** a roller bed (11) consisting of cleaning rolls (12) extending across the direction of movement of the uprooting tools (6) is provided, which takes over the root vegetables from all uprooting tools (6).

## Revendications

1. Procédé destiné à l'arrachage de plantes à racines comestibles, en particulier des betteraves, disposées en rangs parallèles sur le sol, dans lequel des outils d'arrachage, munis de surfaces formant des socs et se déplaçant le long des rangs, ameublissent le sol et dans lequel les plantes à racines comestibles sont soulevées hors du sol ameubli, **caractérisé en ce que** le sol, sur les deux côtés des rangs (17) de plantes à racines comestibles, est soulevé en surface avec les surfaces formant socs (18) qui s'étendent latéralement par rapport au sens de déplacement des outils d'arrachage (6), et **en ce que** les plantes à racines comestibles sont soulevées hors du sol ameubli par des surfaces de guidage (19) des outils d'arrachage (6) qui sont localement inclinées vers le haut derrière les extrémités libres, orientées vers les rangs (17), des surfaces formant socs (18).

2. Procédé selon la revendication 1, **caractérisé en ce que** les plantes à racines comestibles, au moment où elles sont soulevées hors du sol, sont supportées dans le sens opposé au sens de déplacement des outils d'arrachage (6).

3. Procédé selon la revendication 1 ou 2, **caractérisé en ce que** les outils d'arrachage (6), sur les deux côtés des rangs (17) de plantes à racines comestibles, sont déplacés en va-et-vient en sens opposé l'un de l'autre dans leur sens de déplacement.

4. Procédé selon l'une quelconque des revendications 1 à 3, **caractérisé en ce que** les plantes à racines comestibles arrachées sont transférées sur un circuit de transport et de nettoyage, mis en mouvement par les outils d'arrachage (6), d'une arracheuse de betteraves, en particulier automotrice.

5. Dispositif destiné à l'arrachage de plantes à racines comestibles, en particulier des betteraves, disposées en rangs parallèles sur le sol, du fait que le dispositif est déplacé le long des rangs avec des outils d'arrachage, munis de surfaces formant des socs et destinés à soulever les plantes à racines comestibles hors du sol ameubli, **caractérisé en ce que** les surfaces formant socs (18) se déplacent latéralement par rapport au sens de déplacement des outils d'arrachage (6), afin de soulever le sol en surface sur les deux côtés des rangs (17) de plantes à racines comestibles en vue de l'ameublir, et **en ce que**, pour soulever les plantes à racines comestibles hors du sol ameubli, il est prévu des surfaces de guidage (19) qui sont localement inclinées vers le haut derrière les extrémités libres, orientées vers les rangs (17), des surfaces formant socs (18).

6. Dispositif selon la revendication 5, **caractérisé en ce que**, au milieu entre deux rangs (17) de plantes à racines comestibles, il est prévu respectivement un porte-outil (7), à partir duquel les surfaces formant socs (18) s'étendent en étant inclinées vers l'arrière par rapport aux rangs (17) de plantes à racines comestibles.

7. Dispositif selon la revendication 6, **caractérisé en ce qu'**il est prévu un système d'entraînement (14-16) pour que des porte-outil (7) juxtaposés puissent se déplacer en va-et-vient en sens opposé l'un par rapport à l'autre dans le sens de déplacement des outils d'arrachage (6).

8. Dispositif selon la revendication 7, **caractérisé en ce que** les surfaces de guidage (19) sont prévues sur des barres de guidage (21), qui sont attachées en bas contre les corps de soc (20), qui forment les surfaces formant socs (18) orientées horizontalement.

9. Dispositif selon l'une quelconque des revendications 5 à 8, **caractérisé en ce qu'**un arbre (9) muni de pales (8), orienté transversalement au sens de déplacement des outils d'arrachage (6) et entraîné en rotation, est prévu au-dessus des surfaces de guidage (19) de tous les outils d'arrachage (6).

10. Dispositif selon la revendication 9, **caractérisé en ce que** l'arbre (9) est muni de pales (8) sur toute sa largeur.

11. Dispositif selon au moins l'une quelconque des revendications 5 à 10, **caractérisé en ce qu'**il est prévu un banc de rouleaux (11), qui est formé par des rouleaux de nettoyage (12) orientés transversalement au sens de déplacement des outils d'arrachage (6) et qui reçoit les plantes à racines comestibles de tous les outils d'arrachage (6).
